# EUROPÄISCHE PATENTSCHRIFT

(11) **EP 2 013 654 B1**
(45) Veröffentlichungstag und Bekanntmachung des Hinweises auf die Patenterteilung: **24.02.2016**
(21) Anmeldenummer: 07724642.9
(22) Anmeldetag: 27.04.2007
(51) Int. Cl.: G02B 21/02, G02B 21/18, G02B 21/24

(54) **BEWEGUNGSDETEKTIERENDES MODULARES MIKROSKOPSYSTEM**
MOTION-DETECTING MODULAR MICROSCOPE SYSTEM
SYSTÈME DE MICROSCOPE MODULAIRE À DÉTECTION DE MOUVEMENT

(30) Priorität: 04.05.2006 DE 102006020737
(43) Veröffentlichungstag der Anmeldung: 14.01.2009
(73) Patentinhaber: Westfälische Wilhelms-Universität Münster, 48149 Münster (DE)
(72) Erfinder: BERGER, Gernot, 48149 Münster (DE); DEITMAR, Hendrik, 48147 Münster (DE); DENZ, Cornelia, 48159 Münster (DE); GROTHE, Oliver, 50739 Köln (DE); HOLTMANN, Frank, 48151 Münster (DE); KRISHNAMACHARI, Vishnu, Vardhan, Irvine, CA 92697 (US)
(74) Vertreter: Müller, Eckhard
(86) Internationale Anmeldenummer: PCT/EP2007/003712
(87) Internationale Veröffentlichungsnummer: WO 2007/128433

(56) Entgegenhaltungen:
- WO-A1-2004/023185
- DE-A1- 3 804 198
- DE-A1- 4 231 470
- DE-A1- 10 100 247
- DE-B3- 10 350 918
- US-A- 5 005 927
- KRISHNAMACHARI VISHNU ET AL: "Novelty filtering with a photorefractive lithium-niobate crystal" APPLIED PHYSICS LETTERS, AIP, AMERICAN INSTITUTE OF PHYSICS, MELVILLE, NY, US, Bd. 87, Nr. 7, 8. August 2005 (2005-08-08), Seiten 71105-71105, XP012077441 ISSN: 0003-6951 in der Anmeldung erwähnt

## Beschreibung

Die vorliegende Erfindung betrifft ein Detektionsmodul zur Anbindung an ein Mikroskop zur Herstellung eines bewegungsdetektierenden Mikroskopsystems und ein bewegungsdetektierendes Mikroskopsystem zur Visualisierung dynamischer Vorgänge und Prozesse, basierend auf dem Prinzip eines photorefraktiven Neuigkeitsfilters.

### Stand der Technik

Ein auf photorefraktiver Strahlkopplung basierender optischer Neuigkeitsfilter ist als solches im Stand der Technik bekannt. Dieser stellt einen zeitlichen Hochpassfilter zur Verfügung, der ausschließlich dynamische Veränderungen in einem Bild sichtbar macht und einen stationären Hintergrund unterdrückt.

So ist beispielsweise in der US 5,005,927 ein nichtlinear optisches Mikroskopsystem beschrieben, welches eine nichtlineare Kopplung optischer Strahlen in einem photorefraktiven Bariumtitanatkristall ausnutzt. Hierbei werden ein Referenzstrahl und ein mit Bildinformationen versehener Objektstrahl fortwährend in einem photorefraktiven Material kohärent überlagert, sodass in der Schnittebene der beiden Strahlen ein transientes Volumenhologramm im Material gespeichert wird.

Abhängig von der Intensitätsverteilung und Phasenlage der beiden nichtlinear miteinander koppelnden Strahlen entsteht eine Brechungsindexmodulation im photorefraktiven Medium, die im Falle eines Bariumtitanatkristalls um 90 Grad zur Intensitätsverteilung der Strahlen phasenverschoben ist. Bei einem stationären Objektstrahl kommt es aufgrund dieser Phasenverschiebung zur destruktiven Interferenz, sodass letztlich ein vollständig schwarzes Bild am Kristallausgang zu beobachten ist. Unterliegt der Objektstrahl jedoch einer zeitlichen Intensitäts- oder Phasenänderung, so wird diese instantan am Kristallausgang sichtbar, da eine entsprechende Änderung der Brechungsindexmodifikation des Materials eine gewisse Zeitdauer in Anspruch nimmt innerhalb welcher die Bedingungen für eine vollständige destruktive Interferenz nicht erfüllt sind. Auf diese Art und Weise können Intensitäts- und Phasenveränderungen des Objektstrahls instantan und in Echtzeit visualisiert werden.

Der auf der photorefraktiven Strahlkopplung basierende Neuigkeitsfilter eignet sich daher hervorragend für Untersuchungen von Strömungsfeldern und deren zeitlichen Dichteschwankungen, die sich unmittelbar auf die räumliche Phasenverteilung eines Lichtstrahls auswirken.

Aus DE 42 31 470 A1 ist ein modulares Mikroskopsystem bekannt, das aus zusammengesetzten Grundkörpermodulen besteht und dem weitere Module zugeordnet werden können. Das modular konzipierte Mikroskopsystem ist in servicefreundlicher Baugruppenmontage herstellbar. Zur Analyse von dynamischen Vorgängen ist das Mikroskopsystem nicht ausgelegt.

Aus DE 103 50 918 B3 und aus DE 101 00 247 A1 sind Mikroskopsysteme bekannt, die auf der Basis einer punktförmigen Objektabtastung arbeiten. Solche Mikroskopiesysteme sind zur Analyse dynamischer Vorgänge oder Prozesse mit hohen Bewegungsgeschwindigkeiten in zweidimensionalen Bildfeldern prinzipiell nicht verwendbar.

Aus WO 2004/023185 A1 ist ein Kamera-Adapter bekannt, durch den es möglich ist, beliebige Video- und Fotokameras an einen Strahlenteiler eines Mikroskops anzuschließen. Der zwischen dem Strahlenteiler und der Kamera anzuordnende Kamera-Adapter besteht aus einem Gehäuse mit zwei Anschlussstutzen. Im Gehäuse des Kamera-Adapters sind ein 90°-Prisma und ein Spiegel als zusätzliche strahlenlenkende Elemente so angeordnet, dass die optischen Achsen der Anschlussstutzen einen Winkel kleiner als 180° einschließen.

Aus DE 38 04 198 A1 ist ein Adapter für ein Mikroskop bekannt. Der Adapter weist eine Abbildungslinse auf. Ein Prisma reflektiert einfallendes Licht zweimal, um das Licht in einer Richtung zu emittieren, die unter einem Winkel vom 135° mit der optischen Einfallsachse verläuft. Ein Doppelspiegel kann derart um eine Drehachse schwenken, dass er wahlweise in einer von zwei Positionen angeordnet werden kann. Der Adapter wird mit einer Montagebuchse des Mikroskops zusammengekoppelt. Eine Stumm- und eine TV-Kamera werden ebenfalls an entsprechende Buchsen des Adapters angeschlossen.

### Problem

In den Lebenswissenschaften, insbesondere in der Systembiologie ist die Beobachtung von sich bewegenden Mikro- und Nano-Objekten sowie die ganzheitliche in Vivo Analyse der Dynamik in biologischen Funktionssystemen erforderlich. Es können prinzipiell Aufschlüsse über die Entwicklung und das Verhalten von lebenden Organismen, über Vorgänge in Organen, über Stoffwechselvorgänge oder über die intra- und interzelluläre Dynamik gewonnen werden. Gleichzeitig treten in diesen Anwendungsgebieten zunehmend strömungsmechanische Fragestellungen im mikroskopischen Längenmaßstab auf. Insbesondere in der Medizin ist die Charakterisierung und Untersuchung der Strömungsverhältnisse in biologischen oder künstlichen Kapillaren zur Erkennung und zur Prävention von Krankheiten äußerst wichtig.

Eine herkömmliche mikroskopische Beobachtung solch biologischer Objekte und chemischer Reaktanten ist kaum möglich, da die Objekte zumeist vollständig transparent sind. Zwar kann prinzipiell das Zernickesche Phasenkontrastverfahren verwendet werden, doch wird hierbei auch gleichzeitig ein von einer Trägersubstanz oder von anderen stationären Mikroobjekten rührender stationärer Hintergrund sichtbar, was gerade für die Beobachtung dynamischer Prozesse von Nachteil ist. Andere Mikroskopieverfahren, wie etwa die konfokale Mikroskopie, arbeiten auf einem Abtastprinzip und sind daher a priori nicht in der Lage, dynamische Vorgänge oder Prozesse mit hohen Bewegungsgeschwindigkeiten in zweidimensionalen Bildfeldern zuverlässig zu analysieren.

Die aus dem Stand der Technik bekannten photorefraktiven Neuigkeitsfilter sind bislang für eine gewerbliche Anwendung kaum geeignet, da für eine effiziente Kopplung von Objekt- und Referenzstrahl die einzelnen Strahlparameter, wie etwa Strahlintensität, Polarisationsrichtung sowie eine relative Phase der im photorefraktiven Medium miteinander koppelnden Strahlen präzise eingestellt und gegebenenfalls nachjustiert werden müssen. Der Betrieb eines photorefraktiven Neuigkeitsfilters ist daher bislang Fachkräften auf dem Gebiet der nichtlinearen Optik vorbehalten, die profunde Kenntnisse zur Justage und über den grundlegenden Aufbau eines solchen Systems verfügen.

### Aufgabe

Der vorliegenden Erfindung liegt daher die Aufgabe zugrunde, eine Möglichkeit anzubieten, ein bedienerfreundliches, wartungsarmes und zudem vielseitig einsetzbares bewegungsdetektierendes Mikroskopsystem zur Verfügung zu stellen, das auch von Endbenutzern bedienbar ist, die nur über geringe Kenntnisse zur Mikroskopie im Allgemeinen verfügen. Darüber hinaus soll das Mikroskopsystem vielseitig einsetzbar und unter Verwendung handelsüblicher Mikroskope, ausgebildet sein.

### Erfindung und vorteilhafte Wirkungen

Das der Erfindung zugrunde liegende Problem wird mittels eines Detektionsmoduls gemäß Patentanspruch 1 bzw. eines Mikroskopsystems gemäß Patentanspruch 8 gelöst. Weitere vorteilhafte Ausführungsformen der Erfindung sind in den Unteransprüchen angegeben.

Die Erfindung betrifft ein Detektionsmodul mit den Merkmalen des Anspruchs 1 für ein bewegungsdetektierendes modulares Mikroskopsystem, das mit einer für den Objektstrahl des Mikroskops vorgesehenen Aufnahme am Tubus des Mikroskops lösbar anordenbar ist. Das Detektionsmodul weist insbesondere ein nichtlinear optisches Medium auf, in welchem der vom Mikroskopobjektiv abgebildete Objektstrahl mit einem dazu kohärenten Referenzstrahl koppelt.

Die Aufnahme zur Anbindung an den Tubus des Mikroskops ist vorzugsweise als runde Öffnung ausgestaltet, mit welcher das Detektionsmodul anstelle eines Okulars auf den Mikroskoptubus aufgeschoben und dort lösbar befestigt werden kann. Von Vorteil ist hierbei, wenn sowohl der Mikroskoptubus als auch die Aufnahme des Detektionsmoduls einen standardisierten Durchmesser und/oder ein standardisiertes Gewindemaß oder dergleichen Befestigungsmittel aufweisen.

Beispielsweise sind sowohl der Mikroskoptubus als auch die Aufnahme des Detektionsmoduls als C-Mount ausgebildet. Die Wahl eines solchen oder eines vergleichbaren Standardmaßes für die Anbindung zwischen den einzelnen Modulen des Mikroskopsystems ist für eine vielseitige Verwendbarkeit der einzelnen Module von Vorteil.

Das Detektionsmodul, in welchem letztlich die Strahlkopplung stattfindet, weist insbesondere Mittel zur relativen Justage und Kalibrierung für den Objektstrahl und/oder den Referenzstrahl auf, sodass eine möglichst effektive Strahlkopplung, vorzugsweise selbsttätig durch das System eingestellt werden kann.

Nach einer weiteren Ausführungsform ist das Detektionsmodul dazu ausgebildet, dass an einer dem Tubus gegenüberliegenden Strahlaustrittsöffnung ein Bilderfassungssystem lösbar befestigt werden kann. Beispielsweise können auch hier, ähnlich wie bei der Anbindung des Detektionsmoduls an den Tubus vergleichbare beziehungsweise ähnlich standardisierte Verbindungsmittel, wie etwa eine C-Mount-Schnittstelle, Verwendung finden.

Als Bilderfassungssystem kommen vorzugsweise Charge Coupled Device (CCD) Kameras (CCD) zum Einsatz, die zur unmittelbaren Bildakquise eines zweidimensionalen Bildes am Ausgang des Detektionsmoduls geeignet sind. Die mittels des Bilderfassungssystems aufgenommenen zweidimensionalen Bilder können anschließend zur elektronischen Weiterverarbeitung einem Computersystem oder dergleichen Bildauswertesystem zugeführt werden.

Weiterhin ist für das Detektionsmodul eine Strahleinkopplungseinheit zur Einkopplung des Referenzstrahls in das nichtlineare optische Medium vorgesehen. Diese Strahleinkopplungseinheit weist vorzugsweise eine Faserkupplung auf, an welcher eine den Referenzstrahl führende optische Faser gekoppelt werden kann. Die Faserkupplung ist derart ausgebildet, dass der von der Faser zur Verfügung gestellte Referenzstrahl stets unter dem gleichen vorgegebenen Winkel zur optischen Achse des Objektstrahls auf das nichtlinear optische Medium trifft.

Zur Justage und/oder Kalibrierung das Detektionsmoduls ist insbesondere vorgesehen, dass die Strahleinkopplungseinheit zumindest aber deren Faserkupplung in wenigstens zwei, vorzugsweise in allen drei Raumrichtungen justierbar ist.

Somit kann der Referenzstrahl exakt an eine vorgegebene Position auf das nichtlineare Medium justiert werden, welche im Bedarfsfall auch manuell geändert werden kann.

Des Weiteren ist vorgesehen, dass das Detektionsmodul zumindest ein inneres Gehäuseteil und ein äußeres Gehäuseteil aufweist, wobei inneres und äußeres Gehäuseteil in Richtung zur optischen Achse des Objektstrahls zueinander verschiebbar sind. Hierbei ist insbesondere vorgesehen, dass die beiden Gehäuseteile mittels eines elektrisch ansteuerbaren Stellantriebs gegeneinander verschiebbar sind.

Nach einer weiteren Ausführungsform ist das innere Gehäuseteil zumindest bereichsweise in dem äußeren Gehäuseteil des Detektionsmoduls geführt. Die beiden Gehäuseteile weisen vorzugsweise eine zylindrische Geometrie auf, wobei an der Wandung des äußeren Gehäuseteils einzelne in Axialrichtung verlaufende Aussparungen vorgesehen sind, die eine relative axiale Verschiebbarkeit der beiden Gehäuseteile auch dann ermöglichen, wenn beispielsweise von außen zugeführte Funktionsteile, wie etwa die Strahleinkopplungseinheit an dem inneren Gehäuseteil befestigt sind.

Von Vorteil ist weiterhin, dass die optische Weglänge zwischen dem nichtlinear optischen Medium und dem Objektiv des Mikroskops durch relatives Verschieben von innerem und äußerem Gehäuseteil einstellbar ist. Einer Axialverschiebung des Fokuspunktes des Objektstrahls infolge eines Objektivwechsels kann daher durch entsprechendes Verschieben von innerem und äußerem Gehäuseteil kompensiert werden, sodass letztlich stets sichergestellt werden kann, dass sich das nichtlinear optische Medium in einem konstanten Abstand zum Fokuspunkt des Objektstrahls befindet.

Nach einer weiteren Ausführungsform ist die Strahleinkopplungseinheit seitlich und unter einem Winkel zur optischen Achse des Objektstrahls an dem inneren Gehäuseteil angeordnet.

Des Weiteren ist auch das nichtlinear optische Medium austauschbar im Detektionsmodul angeordnet. Das Medium steht hierbei vorzugsweise in direkter mechanischer Wirkverbindung mit dem inneren Gehäuseteil, sodass die Position des nichtlinear optischen Mediums relativ zur Strahleinkopplungseinheit im Wesentlichen konstant bleibt. Im Wesentlichen bleibt der über die Faser eingekoppelte Referenzstrahl bezüglich des nichtlinearen Mediums fixiert.

Nach einer weiteren vorteilhaften Ausführungsform der Erfindung ist zur Fokussierung des Referenzstrahls in das nichtlinear optische Medium zumindest ein fokussierendes optisches Element im Detektionsmodul vorgesehen. Dieses befindet sich vorzugsweise im Bereich der seitlich angeordneten Strahleinkopplungseinheit. Eine Fokussierung des Referenzstrahls ist zur Steigerung der Kopplungseffizienz zwischen Objektstrahl und Referenzstrahl von Vorteil.

Weiterhin ist vorgesehen, dass zur Bestimmung der Intensität des Referenzstrahls die Strahleinkopplungseinheit des Detektionsmoduls zumindest einen Fotodetektor aufweist. Somit können zuverlässige Messwerte über die tatsächlich am nichtlinearen Medium vorliegende Intensität des Referenzstrahls gewonnen werden. Die vom Fotodetektor ermittelbaren Messwerte können zur Regelung einer optimalen Kopplung im nichtlinearen Medium Verwendung finden. So können beispielsweise die Gesamtintensität von Objekt- und Referenzstrahl als auch das Intensitätsverhältnis der beiden Strahlen präzise bestimmt und entsprechend selbsttätig nachgeregelt werden.

Nach einem unabhängigen Aspekt betrifft die Erfindung ein bewegungsdetektierendes Mikroskopsystem, welches ein Strahlmodul und ein Detektionsmodul aufweist. Zudem ist ein Mikroskop vorgesehen, das zumindest ein Objektiv und einen Tubus aufweist. Das Strahlmodul ist zur Erzeugung zumindest eines Referenzstrahls und eines dazu im Wesentlichen kohärenten Objektstrahls vorgesehen, während das Detektionsmodul zur Kopplung des Referenzstrahls mit dem Objektstrahl ein nichtlinear optisches Medium aufweist.

Die vom Strahlmodul erzeugbaren Strahlen Referenzstrahl und Objektstrahl werden im Detektionsmodul in einem nichtlinear optischen Medium gekoppelt, wobei der Objektstrahl zuvor mit einem zu untersuchendem Objekt, wie etwa einem im Wesentlichen transparenten Phasenobjekt, wechselwirkt und somit zum Träger einer objektspezifischen Bildinformation wird. Durch die kohärente Überlagerung von Objektstrahl und Referenzstrahl im nichtlinear optischen Medium, wie etwa einem photorefraktiven Kristall, können dynamische Veränderungen des Objekts anhand der nichtlinearen Kopplung zwischen den beiden Strahlen instantan und zweidimensional ortsaufgelöst visualisiert werden.

Das erfindungsgemäße bewegungsdetektierende Mikroskopsystem zeichnet sich insbesondere durch seinen modularen Aufbau aus. Die Module zur Strahlerzeugung und zur Kopplung von Objekt- und Referenzstrahl sind insbesondere für eine Adaption an handelsübliche Mikroskope vorgesehen, sodass prinzipiell jedes kommerziell erhältliche optische Mikroskop mittels eines Strahlmoduls und eines darauf abgestimmten Detektionsmoduls zu einem erfindungsgemäßen bewegungsdetektierenden modularen Mikroskopsystem aufgerüstet oder adaptiert werden kann.

Jedem dieser einzelnen miteinander kombinierbaren Module, Strahlmodul, Detektionsmodul kommt eine eigene Funktion zu. So dient das zumindest ein Objektiv und einen Tubus aufweisende Mikroskop zur Vergrößerung des Objektstrahls, wodurch letztlich ein vergrößertes Abbild des zu beobachtenden Objekts erzeugt werden kann. Das Strahlmodul hat hierbei die Aufgabe, unter Berücksichtigung sämtlicher für die Strahlkopplung relevanter Parameter, wie etwa transversale Strahlgeometrie und Strahlverlauf, Intensität und/oder Polarisation sowohl den Objekt- als auch den Referenzstrahl für das Gesamtsystem zur Verfügung zu stellen.

Die optische Weglänge zwischen dem nichtlinear optischen Medium und dem Objektiv des Mikroskops kann variabel eingestellt werden.

Es ist hierbei insbesondere vorgesehen, dass die optische Weglänge zwischen dem nichtlinear optischen Medium und dem Objektiv mittels zumindest eines elektrisch betätigbaren Stellantriebs einstellbar ist. In diesem Zusammenhang ist beispielsweise vorgesehen, dass das nichtlinear optische Medium entweder innerhalb des Detektionsmoduls auf der optischen Achse des Objektstrahls verfahrbar ist, oder dass Teile des Detektionsmoduls oder gar das gesamte Detektionsmodul bezogen auf die Position des Objektivs entlang der optischen Achse des Objektstrahls gezielt verschoben werden kann.

Je nach verwendetem Mikroskopobjektiv und Mikroskoptyp kann somit das nichtlinear optische Medium stets an eine Position auf der optischen Achse des Objektstrahls verschoben werden, die für eine nichtlineare Kopplung mit dem Referenzstrahl besonders gut geeignet ist. Eine solche für das nichtlinear optische Medium optimale Position kann etwa durch einen Fokuspunkt des Objektstrahls innerhalb des optischen Systems Mikroskop oder Detektionsmodul vorgegeben sein.

Zur Fokussierung des Objektstrahls in das nichtlinear optische Medium kann zumindest ein fokussierendes optisches Element, insbesondere eine fokussierende Linse vorgesehen sein. Diese Linse ist vorzugsweise in Propagationsrichtung des Objektstrahls hinter einer Bildebene des Mikroskops angeordnet. Sie kann hierzu beispielsweise im Tubus aber auch im Detektionsmodul angeordnet sein. Das fokussierende optische Element kann natürlich auch durch ein Linsensystem realisiert werden, das sowohl im Mikroskoptubus als auch im Detektionsmodul ausgebildet ist. Alternativ kommen als fokussierende optische Elemente auch grundsätzlich so genannte diffraktive optische Elemente infrage.

Weiterhin ist vorgesehen, dass Strahlintensität und Polarisationsrichtung von Objektstrahl und/oder Referenzstrahl und/oder die Phasenbeziehung zwischen Objektstrahl und Referenzstrahl mittels elektromechanischer optischer Elemente einstellbar ist. Hierfür kommen insbesondere drehbare oder verschiebbare optische Elemente, wie λ/2- oder λ/4-Verzögerungsplatten, drehbare lineare Polarisatoren sowie mittels Piezomechanik verschiebbare Spiegel zum Einsatz.

Die elektromechanische Ansteuerung der optischen Elemente erfolgt typischerweise mittels Schritt- und/oder Linearmotoren. Die Linearbewegung der auf Piezokristallen befestigten Spiegel kann in einfacher Art und Weise durch Beaufschlagung mit elektrischer Spannung geeigneter Amplitude erfolgen. Das Einstellen sämtlicher Parameter von Objekt- und Referenzstrahl macht ein manuelles Eingreifen eines Anwenders überflüssig.

Durch die elektromechanisch ansteuerbaren optischen Elemente kann ein Höchstmaß an Automatisierung zur Verfügung gestellt werden, die eine selbsttätige Justage und Kalibrierung des Systems ermöglicht. Zudem können die sensiblen und zumeist nur schwierig von Verunreinigungen und Staub zu befreienden optischen Komponenten in einem staubdicht verschlossenen Gehäuse untergebracht werden. Somit wird zum einen ein manuelles Eingreifen des Anwenders überflüssig und zum anderen können diejenigen Module, in denen diese optischen Elemente angeordnet sind, für den Anwender unzulänglich und effektiv vor Verunreinigungen geschützt, fest verschlossen ausgebildet werden.

Des Weiteren ist ein derartiger nach außen verschlossener Aufbau hinsichtlich Laserschutzbestimmungen von Vorteil, da ein unbeabsichtigtes Austreten von Laserstrahlung aus dem Strahlmodul effektiv vermieden werden kann.

Für die Übertragung des Referenzstrahls vom Strahlmodul zum Detektionsmodul kann eine optische Faser, vorzugsweise eine Mono-Mode Faser vorgesehen sein. Hierbei ist insbesondere von Vorteil, dass die optische Faser sowohl am Strahlmodul als auch am Detektionsmodul mittels entsprechender Faserkopplungen lösbar befestigt werden kann. Die Übertragung des Referenzstrahls mittels einer optischen Faser erlaubt eine universelle und flexible Anordnung von Strahlmodul und Detektionsmodul. Sie ermöglicht sogar das universelle Austauschen unterschiedlicher Strahl- oder Detektionsmodule.

Die Faserein- bzw. -auskopplung für den Referenzstrahl stellt eine Interoperabilität zur Verfügung, mittels derer es prinzipiell möglich ist, die erfindungsgemäßen Strahl- und Detektionsmodule an nahezu jedes Lichtmikroskop anzubinden.

Die Verwendung einer Mono-Mode Faser hat zudem den Vorteil, dass lediglich die räumliche Grundmode des Referenzstrahls, nämlich dessen Gauß-Mode übertragen wird, sodass ein modengefilterter Referenzstrahl mit einem homogenen beziehungsweise symmetrischen Strahlprofil in das Detektionsmodul eingekoppelt wird.

Für das Mikroskopsystem ist weiterhin vorgesehen, dass als nichtlinear optisches Medium ein photorefraktives Material, insbesondere ein photorefraktives Polymer oder ein photorefraktiver Kristall, hierunter insbesondere Lithiumniobat oder Bariumtitanat vorgesehen ist. Weitere in Frage kommende Materialien sind zum Beispiel Lithiumtantalat, Photopolymere, elektrooptische photorefraktive Polymere oder Polymer- beziehungsweise Flüssigkristallmischsysteme.

Photorefraktive Kristalle zeichnen sich durch hohe Nichtlinearitäten und hohe Kopplungskonstanten für die Zweistrahl-Kopplung aus, die vor allem bereits bei sehr geringer Lichtleistung im Bereich einiger Mikrowatt oder gar einiger Nano-Watt auftreten. Von daher ist die Verwendung derartiger Kristalle vorteilhaft wenn das zu untersuchende Objekt keiner hohen Strahlungsleistung ausgesetzt werden soll.

Während Bariumtitanat zur Klasse der diffusions-dominierten photorefraktiven Materialien zählt, deren eingeschriebenes Brechungsindexgitter sich nach einer Zeitdauer τ an eine geänderte Intensitätsverteilung innerhalb des Materials anpasst, weist Lithiumniobat eine Zeitkonstante τ in der Größenordnung einiger Stunden auf, die es ermöglicht, dauerhaft eine Brechungsindexstruktur im Material zu speichern.

Lithiumniobat eignet sich daher in einem neuigkeitsfilternden System zu einem Vergleich mit einem zuvor im Material gespeicherten Referenzbild, während Bariumtitanat zur Visualisierung plötzlicher dynamischer Veränderungen geeignet ist, die - sofern keine weitere Veränderung im Objektstrahl auftritt - in ihrer Intensität abklingt und nach einer Zeitdauer von typischerweise einigen Sekunden als statischer Hintergrund am Ausgang des Neuigkeitsfilters nicht mehr als Neuigkeit zu erkennen ist.

Da Lithiumniobat nicht zu den diffusionsbestimmten Kristallen zählt und somit auch keine merkliche Zweistrahlkopplung zeigt, ist es für die Implementierung eines neuigkeitsfilternden Systems erforderlich, einen künstlichen Phasenversatz auf den Referenzstrahl zu geben, nachdem das ursprüngliche Gitter in den Kristall geschrieben ist. Nähere Informationen zur Neuigkeitsfilterung mit photorefraktivem Lithiumniobat gehen aus V. Krishnamachari, Grothe et al. "Novelty filtering with a photorefractive lithium-niobate crystal", Applied Physics letters 87, 071105 (2005) hervor, deren Inhalt vollumfänglich zum Offenbarungsgehalt dieser Anmeldung zu zählen ist.

Weiterhin ist vorgesehen, dass die Strahleinkopplungseinheit des Detektionsmoduls einen verstellbaren Polarisator aufweist, der eine präzise Abstimmung der Polarisationsrichtung von Objektstrahl und Referenzstrahl direkt vor einer Einkopplung in das nichtlinear optische Medium ermöglicht.

Es ist ein Steuermodul für das Mikroskopsystem vorgesehen, welches zum Einstellen der Intensität und/oder Polarisationsrichtung von Objektstrahl und/oder Referenzstrahl ausgebildet ist. Darüber hinaus kann es alternativ oder ergänzend zum Einstellen der Phase zwischen Objektstrahl und Referenzstrahl vorgesehen werden. Das Steuermodul dient in erster Linie einer elektrischen Ansteuerung von elektromechanischen optischen Elementen zur Regulierung sämtlicher Strahlparameter. Das Steuermodul kann hierbei in das Mikroskopsystem, beispielsweise in das Strahlmodul oder in das Detektionsmodul integriert sein. Wahlweise kann das Steuermodul jedoch auch als externes eigenständiges Modul implementiert werden, welches wahlweise zur Kalibrierung und/oder zum Betrieb des Mikroskopsystems an einzelne Komponenten oder Module des Mikroskopsystems nach Bedarf ankoppelbar ist.

Nach einer weiteren Ausführungsform sind für das Steuermodul Steuermittel vorgesehen, die der Fokusposition des Objektstrahls und/oder der Objektbrennweite des Mikroskops entsprechend zum selbsttätigen Einstellen der optischen Weglänge zwischen Objektiv und dem nichtlinear optischen Medium ausgebildet sind.

Das Steuermodul weist weiterhin zumindest eine Schnittstelle zur Übertragung von Daten und/oder Steuerbefehlen zwischen dem Steuermodul und dem Strahlmodul und/oder dem Detektionsmodul und/oder einem externen Kontrollmodul auf. Es sind ferner auch Eingabe- und Ausgabemittel am Steuermodul vorgesehen, die dem Benutzer die unmittelbare Kontrolle des Mikroskopsystems über das Steuermodul ermöglichen.

Ein Strahlmodul weist elektromechanische optische Elemente auf, die zum Einstellen von Intensität und/oder Polarisationsrichtung von Objektstrahl und/oder Referenzstrahl und/oder die zum Einstellen der Phase zwischen dem Objektstrahl und dem Referenzstrahl ausgebildet sind. Die im Strahlmodul vorgesehenen elektromechanischen optischen Elemente sind insbesondere über das Steuermodul direkt ansteuerbar.

Weiterhin ist vorgesehen, dass das Strahlmodul zumindest eine optische Schnittstelle zur Einkopplung von Strahlung einer externen Strahlquelle aufweist. Somit kann anstelle oder alternativ zur Strahlquelle des Strahlmoduls auch eine extern vorhandene Strahlquelle Verwendung finden, die insbesondere mit faseroptischen Mitteln an das Strahlmodul und an das Mikroskopsystem angekoppelt werden kann. Dies erlaubt eine effiziente Nutzung und Auslastung einer in der Anschaffung kostenintensiven Laserlichtquelle.

In einer weiteren vorteilhaften Ausführungsform sind an dem Strahlmodul mehrere optische Schnittstellen zur Kopplung mehrerer Referenz- und/oder Objektstrahlen für eine Vielzahl von Mikroskopen vorgesehen. Auf diese Art und Weise kann ein einziges Strahlmodul als Strahlquelle für eine Vielzahl von Mikroskopen dienen, die auch räumlich getrennt voneinander aufgestellt und betrieben werden können. Da für eine effiziente Kopplung sowohl der Objekt- als auch der Referenzstrahl einen recht hohen Kohärenzgrad aufweisen müssen, kommt als Lichtquelle zumeist nur eine hochwertige und in der Anschaffung recht kostenintensive Laserlichtquelle infrage. Die Möglichkeit, eine Vielzahl von Mikroskopen oder Mikroskopsystemen mit einem einzigen Strahlmodul unter Einsatz lichtleitender Fasern zu speisen, reduziert den Kostenaufwand erheblich und macht das System universell einsetzbar.

Von Vorteil ist weiterhin, dass das Strahlmodul zur Erzeugung von zumindest zwei Objektstrahlen und/oder zwei Referenzstrahlen unterschiedlicher Wellenlänge ausgebildet ist. Die Referenz- und Objektstrahlen weisen hierbei paarweise identische Wellenlängen auf, so dass sie paarweise im nichtlinearen Medium miteinander wechselwirken können. Insbesondere ist hierbei vorgesehen, dass sowohl die beiden Objektstrahlen unterschiedlicher Wellenlänge als auch die beiden Referenzstrahlen unterschiedlicher Wellenlänge durch das Mikroskopsystem gleichzeitig ko-propagieren.

Auf diese Art und Weise wird zum Beispiel eine die Messung von Phasenverschiebungen in einem Bereich größer als π ermöglicht, was somit zu einer Steigerung des Messbereichs des Mikroskopsystems führt. Als typische Wellenlängen kommen insbesondere λ=488nm oder 532nm oder λ=633nm in Frage.

Es versteht sich von selbst, dass die anderen Module, hierunter insbesondere das Detektionsmodul, bei einer Ausstattung des Strahlmoduls mit zwei Lichtquellen unterschiedlicher Wellenlänge in entsprechender Weise an eine Zwei- beziehungsweise Vierstrahlkonfiguration angepasst werden kann.

Es kann ein Computerprogrammprodukt mit Programmmitteln zur Steuerung des Mikroskopsystems vorgesehen sein. Die Programmmittel sind hierbei dazu ausgebildet, die in einer Datenbank oder in einem Speicher abgelegten Angaben über das im Detektionsmodul eingesetzte nichtlinear optische Medium abzufragen, die Intensität von Referenzstrahl und/oder Objektstrahl zu ermitteln, ein für die Strahlkopplung von Objektstrahl und Referenzstrahl optimales Intensitätsverhältnis zu bestimmen, und die elektromechanischen optischen Elemente des Mikroskopsystems derart anzusteuern, dass ein optimales Intensitätsverhältnis für die Strahlkopplung zwischen Referenzstrahl und Objektstrahl eingestellt wird.

Das Computerprogrammprodukt kann Programmmittel zum Ermitteln der Brennweite des verwendeten Objektivs aufweisen und dazu ausgebildet sein, elektrische Stellantriebe derart anzusteuern, dass das im Detektionsmodul angeordnete nichtlinear optische Medium im Fokusbereich des Objektstrahl positioniert wird. Die Ermittlung der Brennweite des Objektivs kann beispielsweise über eine Speicher- oder Datenbankabfrage erfolgen.

### Ausführungsbeispiele

Weitere Merkmale, Ziele, Vorteile sowie Anwendungsmöglichkeiten der vorliegenden Erfindung ergeben sich aus der nachfolgenden Beschreibung von Ausführungsbeispielen anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen oder deren Rückbeziehung. Es zeigen:
- Figur 1: eine schematische Abbildung des bewegungsdetektierenden Mikroskopsystems,
- Figur 2: die optischen Komponenten des Strahlmoduls,
- Figur 3: die Komponenten des Detektionsmoduls,
- Figur 4: eine schematische Darstellung des Detektionsmoduls im Querschnitt,
- Figur 5: das Gehäuse des Detektionsmoduls,
- Figur 6: ein Blockdiagramm der einzelnen Module des Mikroskopsystems und
- Figur 7: ein Blockdiagramm mehrerer Mikroskope, die von einem gemeinsamen Strahlmodul gespeist werden.

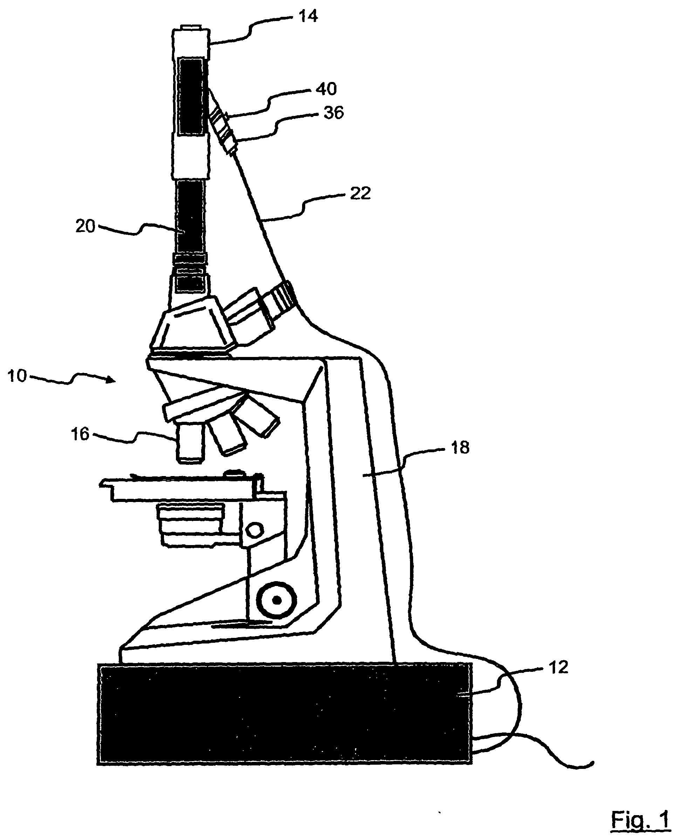

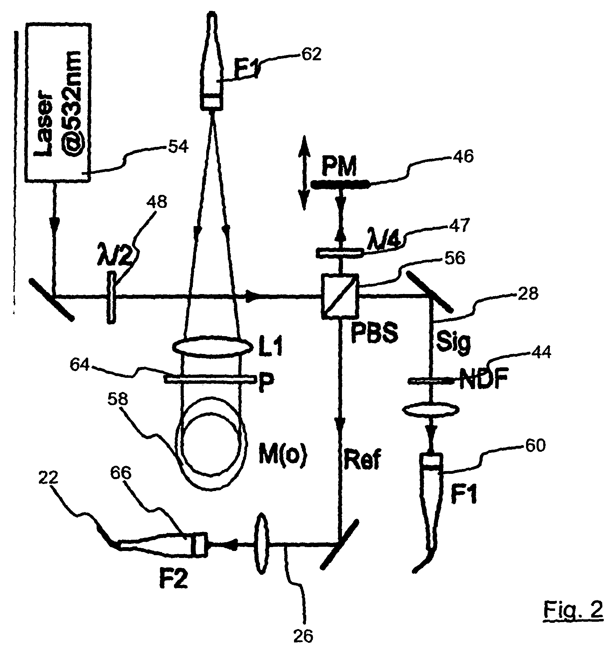

Figur 1 zeigt das Mikroskopsystem 10, welches zumindest ein handelsübliches Mikroskop 18, ein Strahlmodul 12 sowie ein Detektionsmodul 14 aufweist. Das Strahlmodul 12 weist, wie in Figur 2 gezeigt, eine Laserlichtquelle 54 auf, deren Lichtstrahl mittels eines polarisierenden Strahlteilers 56 in einen Referenzstrahl 26 und in einen Objektstrahl 28 aufgeteilt wird. Der Objektstrahl wird zu Strahlreinigungszwecken in eine optische Faser 60 eingekoppelt. Nach erfolgter Propagation durch diese optische Faser tritt der Objektstrahl 28 idealerweise nur noch als Gauß-Mode am Faserende 62 aus, die mittels einer Linse und einem schräg zur Bildebene der Figur stehenden Spiegel 58 nach oben aus dem Strahlmodul ausgekoppelt und in das Mikroskop 18 eingespeist wird.

Der Objektstrahl 28 nimmt einen gewöhnlichen Verlauf innerhalb des Mikroskops 18. Er beleuchtet den Objektträger und das zu untersuchende Objekt im Bereich des Objekttisches und wird letztlich vom Objektiv 16 in den Tubus 20 des Mikroskops weitergeführt, sodass in der im Tubus liegenden Bildebene ein Abbild des zu untersuchenden Objekts entsteht.

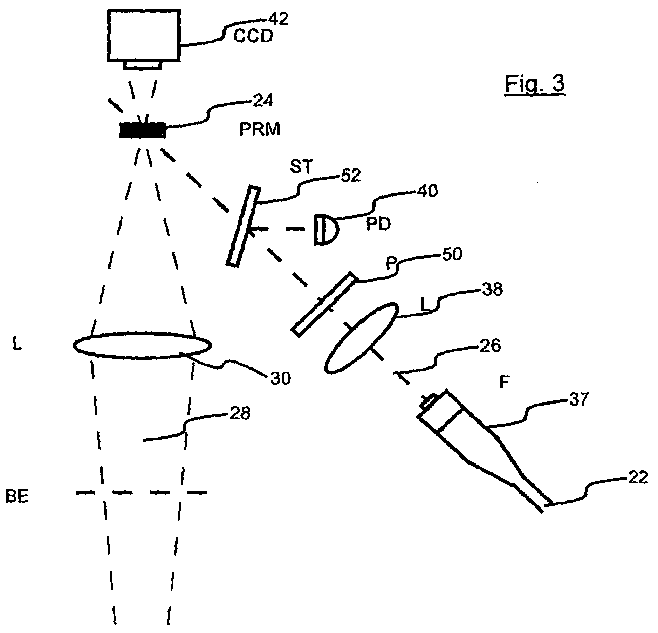

Anstelle eines Okulars ist am Tubus 20 des Mikroskops 18 das Detektionsmodul 14 angeordnet, in welchem der Objektstrahl 28 mit dem Referenzstrahl 26 nichtlinear koppelt. Für die nichtlineare Kopplung ist, wie in Figur 3 dargestellt, ein photorefraktives Medium 24, etwa in Form eines photorefraktiven Polymers oder eines photorefraktiven Kristalls vorgesehen. Der Referenzstrahl 26 wird hierbei über eine seitlich und in einem Winkel zum Detektionsmodul 14 verlaufende Einkopplungseinheit 36 in das Detektionsmodul 14 eingekoppelt. Der Objektstrahl 28 und der Referenzstrahl 26 treffen somit in einem vorgegebenen Winkel im nichtlinear optischen Medium 24 aufeinander.

Hinter dem photorefraktiven Medium 24 ist ein Bildakquisesystem 42 vorgesehen, welches typischerweise einen zweidimensionalen CCD-Chip aufweist, sodass die im Objekt dynamisch ablaufenden Prozesse auf einfache Art und Weise elektronisch weiterverarbeitet werden können.

Zur Erzielung einer optimalen Kopplungseffizienz zwischen Objektstrahl 28 und Referenzstrahl 26 ist insbesondere vorgesehen, dass beide Strahlen mittels entsprechender fokussierender optischer Elemente 30, 38 in das Medium 24 fokussiert werden. Weiterhin ist am Detektionsmodul 14 beziehungsweise an seiner Einkopplungseinheit 36 ein Fotodetektor 40 vorgesehen, der zur Messung der Strahlintensität des Referenzstrahls 26 ausgebildet ist. Mittels eines Strahlteiles 52 wird ein Teil des Referenzstrahls 26 zum Fotodetektor 40 aus dem Referenzstrahl 26 ausgekoppelt.

Weiterhin ist in der Einkopplungseinheit 36 ein Polarisator 50 für den Referenzstrahl 26 vorgesehen. Hierdurch wird ermöglicht, dass die Polarisationsrichtung von Objektstrahl 28 und Referenzstrahl 26 unmittelbar vor Eintreffen und vor der Kopplung im Medium 24 aufeinander abgestimmt werden können.

Das photorefraktive Medium 24 ist vorzugsweise austauschbar im Detektionsmodul 14 angeordnet, sodass prinzipiell unterschiedliche Materialien für unterschiedliche Betriebsmodi des Mikroskopsystems 10 Verwendung finden können.

Der Winkel, unter welchem der Objektstrahl 28 und der Referenzstrahl 26 im Material 24 aufeinander treffen, ist im Wesentlichen konstant. Für eine Kalibrierung des Systems, insbesondere nach einem Wechsel des Mediums 24 ist jedoch eine Justagemöglichkeit für die Einkopplungseinheit 36 beziehungsweise für die Faserkupplung 37 des Referenzstrahls 26 vorgesehen.

Der Referenzstrahl 26 wird mittels einer optischen Faser 22 vom in Figur 2 dargestellten Strahlmodul in das in Figur 3 gezeigte Detektionsmodul eingekoppelt. Die Faserkopplung zwischen Detektionsmodul 14 und Strahlmodul 12 schafft eine große Flexibilität und Interoperabilität für das ganze Mikroskopsystem 10. Das modulare bewegungsdetektierende Mikroskopsystem kann somit an eine Vielzahl handelsüblicher Mikroskope 18 universell angekoppelt werden. Hierdurch kann insbesondere der Justageaufwand für die Einkopplung des Referenzstrahls 26 in das Detektionsmodul 14 auf ein Minimum reduziert werden.

Das in Figur 2 schematisch dargestellte Strahlmodul 12 weist eine Vielzahl elektrisch ansteuerbarer und verstellbarer optischer Elemente, wie zum Beispiel einen Filter (neutral density filter NDF) 44, einen piezomechanisch verstellbaren Spiegel 46, eine drehbare λ/2-Verzögerungsplatte 48 auf. Die Kombination von drehbarer A/2-Verzögerungsplatte und polarisierendem Strahlteiler 56 ermöglicht eine Regulierung des Intensitätsverhältnisses von Referenzstrahl 26 und Objektstrahl 28.

Mittels des Spiegels 46 kann die Phasenbeziehung zwischen Objektstrahl 28 und Referenzstrahl 26 gezielt eingestellt werden. Die λ/4-Verzögerungsplatte 47 dreht die Polarisationsrichtung des Referenzstrahls 26, sodass im Endeffekt Referenzstrahl 26 als auch Objektstrahl 28 eine annähernd gleiche Polarisationsrichtung aufweisen. Der mittels eines Stellantriebs drehbare NDF 44 dient einer Intensitätsregulierung des Objektstrahls 28.

Über den in Figur 3 gezeigten und in der Einkopplungseinheit 36 des Detektionsmoduls 14 angeordneten Polarisator 50 kann schließlich eine weitere Intensitätsregulierung des Referenzstrahls 26 erfolgen. Es ist daher vorgesehen, dass auch der Polarisator 50 mittels eines Stellantriebs elektromechanisch verstellbar ausgebildet ist.

Die elektrische Ansteuerbarkeit sämtlicher optischer Komponenten 44, 46, 48, 50 ermöglichen eine weitgehend automatisierte Kalibrierung und Abstimmung des modularen Mikroskopsystems 10.

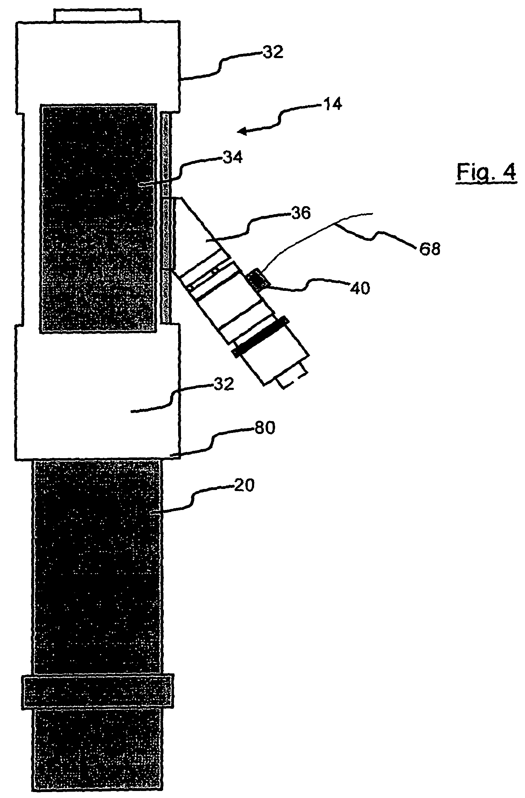

Figur 4 zeigt eine schematische Darstellung des auf den Mikroskoptubus 20 aufgesetzten Detektionsmoduls 14, welches ein äußeres 32 und ein inneres Gehäuseteil 34 aufweist. Die Einkopplungseinheit 36 für den Referenzstrahl 26 ist hierbei an das innere Gehäuseteil 34 angeordnet, in welchem sich auch das photorefraktive Medium 24 befindet. Die für die Fokussierung des Objektstrahls 28 vorgesehene Linse 30 ist hier in einem Überlappungsbereich von Detektionsmodul 14 und Mikroskoptubus 20 angeordnet.

Die Öffnung 80, mit welcher das Detektionsmodul 14 auf den Okularansatz des Tubus 20 aufgeschoben werden kann, weist typischerweise ein Standardmaß, wie etwa einen C-Mount-Anschluss auf, womit ein leichtes und sicheres Auswechseln des Detektionsmoduls 14 ermöglicht wird. Ähnliche Anschlussmöglichkeiten für das Bildakquisesystem 42 weist die Ausgangsöffnung 82 des Detektionsmoduls 14 auf, die am stirnseitigen Endabschnitt des äußeren Gehäuseteils 32 ausgebildet ist.

Das innere 34 und das äußere 32 Gehäuseteil sind entlang der optischen Achse des Objektstrahls 28 gegeneinander verschiebbar ausgebildet. Auf diese Art und Weise kann das am inneren Gehäuseteil 34 angeordnete nichtlineare Medium 24 auf der optischen Achse des Objektstrahles 28 derart verschoben werden, dass der Fokuspunkt des Objektstrahls 28 auch bei einem Auswechseln des Objektivs 16 des Mikroskops 18 stets innerhalb des Mediums 24 zu liegen kommt.

Die den unterschiedlichen und universell auswechselbaren Objektiven 16 des Mikroskops 18 zugeordneten Fokuspositionen des Objektstrahls 28 werden typischerweise in einer Zuordnungstabelle hinterlegt und können zum selbsttätigen und weitgehend automatisierten Verstellen von innerem und äußerem Gehäuseteil 32, 34 ausgelesen und verarbeitet werden.

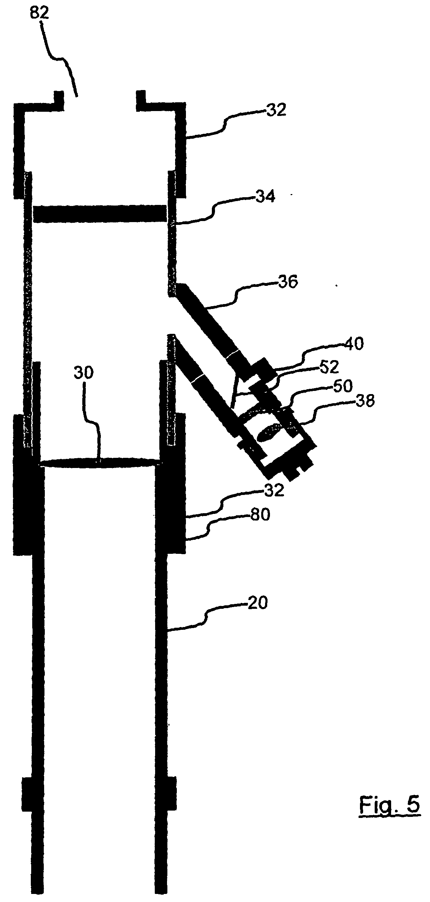

Figur 5 zeigt schließlich eine schematische Außenansicht eines auf einen Tubus 20 aufgesetzten Detektionsmoduls 14 gemäß Figur 4. Inneres und äußeres Gehäuseteil 34, 32 sind als im Wesentlichen zylindrische Hülse ausgebildet, wobei die äußere Hülse 32 in Axialrichtung verlaufende Durchbrechungen an der Außenwandung aufweist. Diese Ausnehmungen im äußeren Zylindermantel sind für das axiale Verschieben der inneren Hülse 34 erforderlich, da an dieser die Einkopplungseinheit 36 für den Referenzstrahl 26 seitlich angeordnet ist. Die vom Fotodetektor 40 ermittelbare Intensität des Referenzstrahls 26 wird mittels eines Kabels 68 an ein Steuer- oder Auswertemodul weitergeleitet.

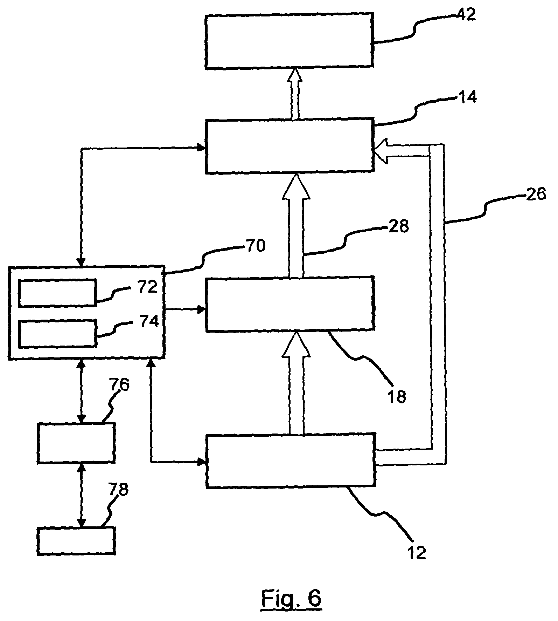

Figur 6 zeigt ein schematisches Blockdiagramm des Mikroskopsystems mit einem Steuermodul 70, welches über Ein- und Ausgabemittel 74 als auch über prozessorgesteuerte Steuermittel 72 verfügt. Während der vom Strahlmodul 12 erzeugte Objektstrahl durch das Mikroskop 18 und durch das Detektionsmodul 14 propagiert und letztlich auf den CCD-Chip 42 trifft, wird der Referenzstrahl direkt vom Strahlmodul via Faserkopplung 22 in das Detektionsmodul 14 eingekoppelt.

Zur Regulierung sämtlicher Strahlparameter wie etwa relative Phasenbeziehung, Polarisationsrichtung, Intensität und Größe des Fokuspunktes im nichtlinearen Medium 24 können sämtliche optische Komponenten des Strahlmoduls 12 als auch des Detektionsmoduls 14 unmittelbar über das Steuermodul 70 angesteuert werden. Es ist insbesondere vorgesehen, dass zum Einstellen optimaler Strahlparameter für eine möglichst hohe Kopplungseffizienz die vom Fotodetektor 40 gemessenen Intensitätswerte systemintern ausgewertet werden können.

Das Steuermodul ist über Ein- und Ausgabemittel 74 direkt von einem Anwender des Mikroskopsystems 10 steuerbar. Alternativ oder ergänzend hierzu weist das Steuermodul 70 eine Schnittstelle zur Kopplung an ein Netzwerk 76 auf, sodass das gesamte System auch mittels externer Kontrollmodule 78 gesteuert und betrieben werden kann. Als Schnittstelle oder Übertragungsmittel kommen insbesondere RS 232, Ethernet, W-LAN, IRDA, Bluetooth und dergleichen infrage. Die externe Ansteuerung kann hierbei über ein Web-Interface oder über Web-Services etwa mittels einer CGI-Schnittstelle erfolgen.

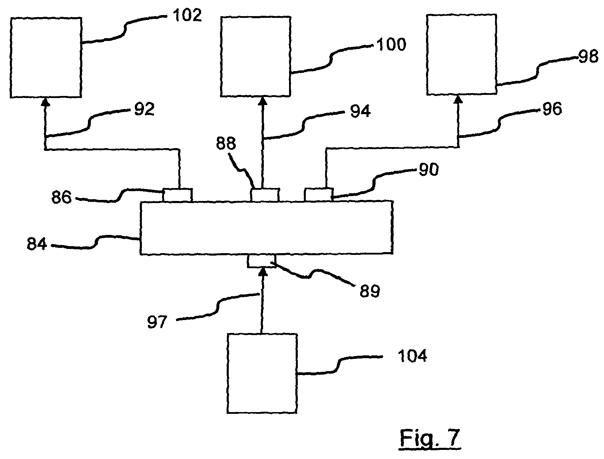

In Figur 7 ist mittels eines Blockdiagramms eine schematische Kopplung eines einzigen Strahlmoduls 84 mit einer Vielzahl von Mikroskopen oder Mikroskopsystemen 98, 100, 102 gezeigt. Das Strahlmodul weist hierfür mehrere optische Schnittstellen 86, 88, 90 auf, mittels derer die einzelnen Mikroskope 98, 100, 102 über lichtleitende Fasern 92, 94, 96 an das Strahlmodul 82 gekoppelt werden können.

Die Faserkopplungen 92, 94, 96 stehen hier exemplarisch für eine Kopplung von jeweils Objektstrahl und Referenzstrahl. Der Betrieb einer Vielzahl unterschiedlicher und räumlich voneinander getrennt aufgestellter Mikroskope 98, 100, 102 reduziert in vorteilhafter Weise die Anschaffungskosten für das Mikroskopsystem und ermöglicht eine optimale Auslastung der hochwertigen Laserlichtquelle des Strahlmoduls 84.

Des Weiteren besteht zusätzlich oder optional die Möglichkeit, Licht einer externen Strahlquelle, insbesondere eines Lasers 104, über eine optische Faser 97 und eine entsprechende optische Schnittstelle 89 in das Strahlmodul 84 einzukoppeln. Somit können vorhandene und externe Lichtquellen universell an das System gekoppelt werden, sodass letztlich mehrere und möglicherweise voneinander räumlich getrennt positionierte Strahlmodule und/oder Mikroskopsystems mittels einer gemeinsamen Lichtquelle gespeist werden können, was zu einer weiteren Kostenminimierung beitragen kann.

### Bezugszeichenliste

- 10: Mikroskopsystem
- 12: Strahlmodul
- 14: Detektionsmodul
- 16: Objektiv
- 18: Mikroskop
- 20: Tubus
- 22: Faser
- 24: Photorefraktives Medium
- 26: Referenzstrahl
- 28: Objektstrahl
- 30: Linse
- 32: Äußeres Gehäuse
- 34: Inneres Gehäuse
- 36: Einkopplungseinheit
- 37: Faserkopplung
- 38: Linse
- 40: Fotodetektor
- 42: CCD-Chip
- 44: NDF
- 46: Piezomechanischer Spiegel
- 47: λ/4-Platte
- 48: λ/2-Platte
- 50: Polarisator
- 52: Strahlteiler
- 54: Laser
- 56: Polarisierender Strahlteiler
- 58: Spiegel
- 60: Faserkupplung
- 62: Faserkupplung
- 64: Polarisator
- 66: Faserkupplung
- 68: Kabel
- 70: Steuermodul
- 72: Prozessor
- 74: Ein-/Ausgabemittel
- 76: Netzwerk
- 78: Kontrollmodul
- 80: Aufnahme
- 82: Strahlaustrittsöffnung
- 84: Strahlmodul
- 86: Faserkupplungen
- 88: Faserkupplungen
- 89: Faserkupplung
- 90: Faserkupplungen
- 92: Faser
- 94: Faser
- 96: Faser
- 98: Mikroskop
- 100: Mikroskop
- 102: Mikroskop
- 104: Laser

## Patentansprüche

1. Detektionsmodul (14) zur Anbindung an ein Mikroskop (18) zur Herstellung eines bewegungsdetektierenden Mikroskopsystems , umfassend zumindest ein inneres Gehäuseteil (34) und ein äußeres Gehäuseteil (32), die in Richtung zur optischen Achse des Objektstrahls (28) zueinander verschiebbar sind, ein nichtlineares optisches photorefraktives Medium (24), eine Strahleinkopplungseinheit (36) zur Einkopplung eines Referenzstrahls (26) in das nichtlinear optische Medium (24), eine am äußeren Gehäuseteil angeordnete Aufnahme (80) mit der das Detektionsmodul (14) am Tubus eines Mikroskops (18) derart lösbar anordenbar ist, dass ein vom Mikroskopobjektiv abgebildeter und zum Referenzstrahl kohärenter Objektstrahl (28) in dem nichtlinearen optischen Medium mit dem Referenzstrahl (26) koppelt, Mittel zur relativen Justage des Objektstrahls (28) und/oder Referenzstrahls (26), eine dem Tubus (20) gegenüberliegende Strahlaustrittsöffnung (82) im äußeren Gehäuseteil, an der ein Bilderfassungssystem (42) lösbar befestigbar ist, wobei das nichtlineare optische Medium (24) und die Strahleinkopplungseinheit (36) in bzw. an dem inneren Gehäuseteil angeordnet und mit diesem auf der optischen Achse des Objektstrahls verschiebbar sind.

2. Detektionsmodul (14) nach Anspruch 1, **dadurch gekennzeichnet, dass** das innere Gehäuseteil (34) zumindest bereichsweise in dem äußeren Gehäuseteil (32) geführt ist.

3. Detektionsmodul (14) nach einem der Ansprüche 1 oder 2, **dadurch gekennzeichnet, dass** die optische Weglänge zwischen dem nichtlinear optischen Medium (24) und dem Objektiv (16) durch relatives Verschieben von innerem (34) und äußerem (32) Gehäuseteil einstellbar ist.

4. Detektionsmodul (14) nach einem oder mehreren der vorhergehenden Ansprüche 1 bis 3, **dadurch gekennzeichnet, dass** die Strahleinkopplungseinheit (36) seitlich und unter einem Winkel zur optischen Achse des Objektstrahls (26) an dem inneren Gehäuseteil (34) angeordnet ist.

5. Detektionsmodul (14) nach einem oder mehreren der vorhergehenden Ansprüche 1 bis 4, **dadurch gekennzeichnet, dass** das nichtlineare photorefraktive optische Medium (24) austauschbar im Detektionsmodul (14) angeordnet ist.

6. Detektionsmodul (14) nach einem oder mehreren der vorhergehenden Ansprüche 1 bis 5, **dadurch gekennzeichnet, dass** zur Fokussierung des Referenzstrahls (26) in das nichtlinear optische Medium (24) zumindest ein fokussierendes optisches Element (38) in der Strahleinkopplungseinheit (36) vorgesehen ist.

7. Detektionsmodul (14) nach einem oder mehreren der vorhergehenden Ansprüche 1 bis 6, **dadurch gekennzeichnet, dass** Detektionsmodul (14) zur Bestimmung der Intensität des Referenzstrahls (26) die Strahleinkopplungseinheit (36) zumindest einen Photodetektor (40) aufweist.

8. Bewegungsdetektierendes Mikroskopsystem (10) mit einem Mikroskop (18), das zumindest ein Objektiv (16) und einen Tubus (20) aufweist, und mit einem Detektionsmodul (14) nach einem der Ansprüche 1 bis 7 und mit einem Strahlmodul (12), wobei das Strahlmodul (12) zur Erzeugung zumindest eines Referenzstrahls (26) und eines dazu im Wesentlichen kohärenten Objektstrahls (28) vorgesehen ist.

9. Mikroskopsystem (10) nach Anspruch 8, **dadurch gekennzeichnet, dass** die optische Weglänge zwischen dem nichtlinear optischen Medium (24) und dem Objektiv (16) variabel einstellbar ist.

10. Mikroskopsystem (10) nach einem der Ansprüche 8 oder 9, **dadurch gekennzeichnet, dass** die optische Weglänge zwischen dem nichtlinear optischen Medium (24) und dem Objektiv (16) mittels zumindest eines elektrisch betätigbaren Stellantriebs einstellbar ist.

11. Mikroskopsystem (10) nach einem der Ansprüche 8 bis 10, **dadurch gekennzeichnet, dass** zur Fokussierung des Objektsstrahls (28) in das nichtlinear optische Medium zumindest ein fokussierendes optisches Element (30), insbesondere eine fokussierende Linse vorgesehen ist.

12. Mikroskopsystem (10) nach einem der Ansprüche 8 bis 11, **dadurch gekennzeichnet, dass** Strahlintensität und Polarisationsrichtung von Objektstrahl (28) und/oder Referenzstrahl (26) und/oder die Phase zwischen Objektstrahl (28) und Referenzstrahl (26) mittels elektromechanisch ansteuerbaren optischen Elementen (44, 46, 48; 50) einstellbar ist.

13. Mikroskopsystem (10) nach einem der Ansprüche 8 bis 12, **dadurch gekennzeichnet, dass** für die Übertragung des Referenzstrahls (28) vom Strahlmodul (12) zum Detektionsmodul (14) eine optische Faser (22), vorzugsweise eine Mono-Mode Faser vorgesehen ist.

14. Mikroskopsystem (10) nach einem der Ansprüche 8 bis 13, **dadurch gekennzeichnet, dass** als nichtlinear optisches Medium (24) ein photorefraktives Polymer oder ein photorefraktiver Kristall, etwa Lithiumniobat, Bariumtitanat, Lithiumtantalat, Photopolymere, elektrooptische photorefraktive Polymere oder Polymerbeziehungsweise Flüssigkristallmischsysteme vorgesehen ist.

15. Mikroskopsystem (10) nach einem der Ansprüche 8 bis 14, **dadurch gekennzeichnet, dass** das Strahlmodul zum Einstellen von Strahlintensität und/oder Polarisationsrichtung von Objektstrahl (28) und/oder Referenzstrahl (26) und/oder der Phase zwischen Objektstrahl (28) und Referenzstrahl (26) elektromechanische optische (44, 46, 48; 50) Elemente aufweist.

16. Mikroskopsystem (10) nach einem der Ansprüche 8 bis 15, **dadurch gekennzeichnet, dass** Strahlmodul eine optische Schnittstelle (89) zur Einkopplung von Strahlung einer externen Strahlquelle (104) aufweist.

17. Mikroskopsystem (10) nach einem der Ansprüche 8 bis 16, **dadurch gekennzeichnet, dass** das Strahlmodul zumindest Schnittstellen (86, 88, 90) zur Einkopplung mehrerer Referenz- (26) und/oder Objektstrahlen (28) in mehrere Mikroskope (98, 100, 102) aufweist.

18. Mikroskopsystem (10) nach einem der Ansprüche 8 bis 17, **dadurch gekennzeichnet, dass** das Strahlmodul zur Erzeugung von zumindest zwei Objektstrahlen (28) und/oder zwei Referenzstrahlen (26) unterschiedlicher Wellenlänge ausgebildet ist.

19. Mikroskopsystem (10) nach einem der Ansprüche 8 bis 18, **dadurch gekennzeichnet, dass** ein Steuermodul vorgesehen ist, das zum Einstellen von Strahlintensität und/oder Polarisationsrichtung von Objektstrahl (28) und/oder Referenzstrahl (26) und/oder zum Einstellen der Phase zwischen Objektstrahl (28) und Referenzstrahl (26) ausgebildet ist.

20. Mikroskopsystem (10) nach einem der Ansprüche 8 bis 19, **dadurch gekennzeichnet, dass** ein Steuermodul vorgesehen ist, bei dem Steuermittel vorgesehen sind, die der Fokusposition des Objektstrahls (28) und/oder der Objektivbrennweite entsprechend zum selbsttätigen Einstellen der optischen Weglänge zwischen Objektiv (16) und dem nichtlinear optischen Medium (24) ausgebildet sind.

21. Mikroskopsystem (10) nach einem der Ansprüche 8 bis 20, **dadurch gekennzeichnet, dass** ein Steuermodul vorgesehen ist, bei dem zumindest eine Schnittstelle zur Übertragung von Daten und Steuerbefehlen zwischen dem Steuermodul und dem Strahlmodul (12) und/oder dem Detektionsmodul (14) und/oder einem externen Kontrollmodul vorgesehen ist.

22. Mikroskopsystem (10) nach einem der Ansprüche 8 bis 21, **gekennzeichnet durch** ein Computerprogrammprodukt mit Programmmitteln zur Steuerung eines Mikroskopsystems (10) mit folgenden Schritten:
Abfragen von in einer Datenbank gespeicherten Angaben über das im Detektionsmodul (24) eingesetzte nichtlinear optische Medium,
Ermitteln der Intensität von Referenzstrahl (26) und/oder Objektstrahl (26),
Bestimmen eines für die Strahlkopplung von Objektstrahl (26) und Referenzstrahl (28) optimalen Intensitätsverhältnisses,
Ansteuern elektromechanischer optischer Elemente (44 , 46 , 48 ; 50 ) zum Einstellen von Strahlintensität des Referenzstrahls (26 ) und/oder des Objektstrahls (28).

23. Mikroskopsystem (10) nach Anspruch 22, **gekennzeichnet durch** Programmmittel zum:
Ermitteln der Brennweite des Objektivs (16),
Ansteuern elektromechanischer optischer Elemente (44 , 46 , 48 ; 50 ) zur Positionierung des nichtlinear optischen Mediums (24 ) im Fokusbereich des Objektstrahls (28 ).

## Claims

1. Detection module (14) for the connection to a microscope (18) for the purpose of manufacturing a motion-detecting microscope system, comprising at least one inner housing part (34) and an outer housing part (32) which can be displaced with respect to each other in the direction of the optical axis of the object beam (28), a non-linear optical photorefractive medium (24), a beam coupling unit (36) for coupling of a reference beam (26) into the non-linear optical medium (24), a reception area (80) which is arranged at the outer housing part and by means of which the detection module (14) can be arranged at the lens barrel of a microscope (18) so as to be detachable in such a manner that an object beam (28) that is imaged by the microscope lens and that is coherent to the reference beam couples with the reference beam (26) in the non-linear optical medium, means for the relative adjustment of the object beam (28) and/or of the reference beam (26), a beam exit opening in the outer housing part which is arranged opposite the lens barrel (20) and at which an image acquisition system (42) can be attached in a releasable manner, wherein the non-linear optical medium (24) and the beam coupling unit (36) are arranged in or at the inner housing part and can be displaced together with the same on the optical axis of the object beam.

2. Detection module (14) according to claim 1, **characterized in that** the inner housing part (34) is guided at least in certain areas in the outer housing part (32).

3. Detection module (14) according to one of the claims 1 or 2, **characterized in that** the optical path length between the non-linear optical medium (24) and the lens (16) can be adjusted through a relative displacement of the inner (34) and the outer (32) housing part.

4. Detection module (14) according to one or multiple of the preceding claims 1 to 3, **characterized in that** the beam coupling unit (36) is arranged at the inner housing part (34) laterally and at an angle to the optical axis of the object beam (26).

5. Detection module (14) according to one or multiple of the preceding claims 1 to 4, **characterized in that** the non-linear photorefractive optical medium (24) is arranged in a replaceable manner in the detection module (14).

6. Detection module (14) according to one or multiple of the preceding claims 1 to 5, **characterized in that** at least one focusing optical element (38) is provided in the beam coupling unit (36) for focusing the reference beam (26) into the non-linear optical medium (24) .

7. Detection module (14) according to one or multiple of the preceding claims 1 to 6, **characterized in that** for determining the intensity of the reference beam (26) the beam coupling unit (36) of the detection module (14) has at least one photodetector (40).

8. Motion-detecting microscope system (10), comprising a microscope (18) that has at least one lens (16) and one lens barrel (20), and comprising a detection module (14) according to one of the claims 1 to 7 as well as a beam module (12), wherein the beam module (12) is provided for generating at least one reference beam (26) and an object beam (28) that is substantially coherent with the same.

9. Microscope system (10) according to claim 8, **characterized in that** the optical path length between the non-linear optical medium (24) and the lens (16) can be variably adjusted.

10. Microscope system (10) according to one of the claims 8 or 9, **characterized in that** the optical path length between the non-linear optical medium (24) and the lens (16) can be adjusted at least by means of a drive that can be actuated in an electrical manner.

11. Microscope system (10) according to one of the claims 8 to 10, **characterized in that** at least one focusing optical element (30), in particular a focusing lens, is provided for focusing of the object beam (28) into the non-linear optical medium.

12. Microscope system (10) according to one of the claims 8 to 11, **characterized in that** the beam intensity and the polarization direction of the object beam (28) and/or of the reference beam (26) and/or the phase between the object beam (28) and the reference beam (26) can be adjusted my means of electromechanically selectable optical elements (44, 46, 48; 50).

13. Microscope system (10) according to one of the claims 8 to 12, **characterized in that** an optical fiber (22), preferably a mono-mode fiber, is provided for the transmission of the reference beam (28) from the beam module (12) to the detection module (14).

14. Microscope system (10) according to one of the claims 8 to 13, **characterized in that** a photorefractive polymer or a photorefractive crystal, for example lithium niobate, barium titanate, lithium tantalate, photopolymers, electrooptical photorefractive polymers, or polymer or liquid crystal mixing systems are provided as the non-linear optical medium (24).

15. Microscope system (10) according to one of the claims 8 to 14, **characterized in that** the beam module comprises electromechanical optical (44, 46, 48; 50) elements for adjusting the beam intensity and/or the polarization direction of the object beam (28) and/or of the reference beam (26), and/or the phase between the object beam (28) and the reference beam (26).

16. Microscope system (10) according to one of the claims 8 to 15, **characterized in that** the beam module comprises an optical interface (89) for coupling radiation of an external beam source (104).

17. Microscope system (10) according to one of the claims 8 to 16, **characterized in that** the beam module has at least interfaces (86, 88, 90) for coupling of multiple reference beams (26) and/or object beams (28) into multiple microscopes (98, 100, 102).

18. Microscope system (10) according to one of the claims 8 to 17, **characterized in that** the beam module is configured for generating at least two object beams (28) and/or two reference beams (26) of different wave lengths.

19. Microscope system (10) according to one of the claims 8 to 18, **characterized in that** a control module is provided that is configured for adjusting the beam intensity and/or the polarization direction of the object beam (28) and/or of the reference beam (26), and/or for adjusting the phase between the object beam (28) and reference beam (26).

20. Microscope system (10) according to one of the claims 8 to 19, **characterized in that** a control module is provided in which control means are provided that are configured for the automated adjustment of the optical path length between the lens (16) and the non-linear optical medium (24) in accordance with the focus position of the object beam (28) and/or of the lens focal distance.

21. Microscope system (10) according to one of the claims 8 to 20, **characterized in that** a control module is provided in which at least one interface for the transfer of data and control commands between the control module and the beam module (12) and/or the detection module (14) and/or an external control module is provided.

22. Microscope system (10) according to one of the claims 8 to 21, **characterized by** comprising a computer program product with program means for controlling a microscope system (10), comprising the following steps:
retrieving information about the non-linear optical medium installed in the detection module (24) that is stored in a database
determining the intensity of a reference beam (26) and/or of the object beam (26),
determining an intensity ratio that is optimal for the beam coupling of the object beam (26) and the reference beam (28),
selecting electromechanical optical elements (44, 46, 48; 50) for adjusting the beam intensity of the reference beam (26) and/or of the object beam (28).

23. Microscope system (10) according to claim 22, **characterized by** comprising program means for:
determining the focal distance of the lens (16),
selecting electromechanical optical elements (44, 46, 48; 50) for positioning of the non-linear optical medium (24) in the focus area of the object beam (28).

## Revendications

1. Module de détection (14) destiné à être raccordé à un microscope (18) pour la réalisation d'un microscope à détection de mouvement, comprenant au moins une partie de boîtier intérieure (34) et une partie de boîtier extérieure (32) qui peuvent être déplacées l'une par rapport à l'autre dans la direction de l'axe optique du faisceau objet (28), un support optiquement photoréfractif non linéaire (24), une unité d'injection de faisceau (36) destinée à l'injection d'un faisceau de référence (26) dans le support optique non linéaire (24), un logement disposé sur la partie de boîtier extérieure (80) au moyen duquel le module de détection (14) peut être disposé de façon amovible sur le tube d'un microscope (18) de manière à ce qu'un faisceau objet (28), dont l'image est formée par l'objectif de microscope et qui est cohérent par rapport au faisceau de référence, soit couplé dans le support optique non linéaire au faisceau de référence (26), des moyens destinés à l'ajustement relatif du faisceau objet (28) et/ou du faisceau de référence (26), une ouverture de sortie de faisceau (82) opposée au tube (20) dans la partie de boîtier extérieure, à laquelle un système d'acquisition d'image (42) peut être fixé de manière amovible, dans lequel le support optique non linéaire (24) et l'unité d'injection de faisceau (36) sont disposés dans ou sur la partie de boîtier intérieure et peuvent être déplacés avec celle-ci sur l'axe optique du faisceau objet.

2. Module de détection (14) selon la revendication 1, **caractérisé en ce que** la partie de boîtier intérieure (34) est guidée au moins dans certaines zones dans la partie de boîtier extérieure (32).

3. Module de détection (14) selon l'une des revendications 1 ou 2, **caractérisé en ce que** la longueur de chemin optique entre le support optique non linéaire (24) et l'objectif (16) est réglable par un déplacement relatif des parties de boîtier intérieure (34) et extérieure (32).

4. Module de détection (14) selon l'une ou plusieurs des revendications précédentes 1 à 3, **caractérisé en ce que** l'unité d'injection de faisceau (36) est disposée latéralement et sous un certain angle par rapport à l'axe optique du faisceau objet (26) sur la partie de boîtier intérieure (34).

5. Module de détection (14) selon l'une ou plusieurs des revendications précédentes 1 à 4, **caractérisé en ce que** le support optique photoréfractif non linéaire (24) est disposé de manière à ce qu'il puisse être échangé dans le module de détection (14).

6. Module de détection (14) selon l'une ou plusieurs des revendications précédentes 1 à 5, **caractérisé en ce qu'**il est prévu au moins un élément optique de focalisation (38) dans l'unité d'injection de faisceau (36), pour focaliser le faisceau de référence (26) dans le support optique non linéaire (24) .

7. Module de détection (14) selon l'une ou plusieurs des revendications précédentes 1 à 6, **caractérisé en ce que** pour le module de détection (14), l'unité d'injection de faisceau (36) comprend au moins un photodétecteur (40) destiné à déterminer l'intensité du faisceau de référence (26).

8. Système de microscope à détection de mouvement (10) comportant un microscope (18) qui comprend au moins un objectif (16) et un tube (20), et comportant un module de détection (14) selon l'une quelconque des revendications 1 à 7 et comportant un module générateur de faisceau (12), dans lequel le module générateur de faisceau (12) est prévu pour générer au moins un faisceau de référence (26) et un faisceau objet (28) sensiblement cohérent par rapport à celui-ci.

9. Système de microscope (10) selon la revendication 8, **caractérisé en ce que** la longueur de chemin optique entre le support optique non linéaire (24) et l'objectif (16) est réglable de manière variable.

10. Système de microscope (10) selon l'une des revendications 8 ou 9, **caractérisé en ce que** la longueur de chemin optique entre le support optique non linéaire (24) et l'objectif (16) est réglable au moyen d'au moins une commande d'actionnement actionnable électriquement.

11. Système de microscope (10) selon l'une quelconque des revendications 8 à 10, **caractérisé en ce qu'**il est prévu au moins un élément optique de focalisation (30), notamment une lentille de focalisation pour focaliser le faisceau objet (28) dans le support optique non linéaire.

12. Système de microscope (10) selon l'une quelconque des revendications 8 à 11, **caractérisé en ce que** l'intensité de faisceau et la direction de polarisation du faisceau objet (28) et/ou du faisceau de référence (26) et/ou la phase entre le faisceau objet (28) et le faisceau de référence (26) est réglable au moyen d'éléments optiques (44, 46, 48; 50) pouvant être commandés électromécaniquement.

13. Système de microscope (10) selon l'une quelconque des revendications 8 à 12, **caractérisé en ce qu'**il est prévu une fibre optique (22), de préférence une fibre monomode, pour transmettre le faisceau de référence (28) du module générateur de faisceau (12) au module de détection (14).

14. Système de microscope (10) selon l'une quelconque des revendications 8 à 13, **caractérisé en ce qu'**il est prévu, en tant que support optique non linéaire (24), un polymère photoréfractif ou un cristal photoréfractif, tel que le niobate de lithium, le titanate de baryum, le tantalate de lithium, des photopolymères, des polymères photoréfractifs électro-optiques ou des systèmes de mélanges de polymères ou de cristaux liquides.

15. Système de microscope (10) selon l'une quelconque des revendications 8 à 14, **caractérisé en ce que** le module générateur de faisceau comprend des éléments optiques électromécaniques (44, 46, 48; 50) destinés à régler l'intensité de faisceau et/ou la direction de polarisation du faisceau objet (28) et/ou du faisceau de référence (26) et/ou la phase entre le faisceau objet (28) et le faisceau de référence (26).

16. Système de microscope (10) selon l'une quelconque des revendications 8 à 15, **caractérisé en ce que** le module générateur de faisceau comprend une interface optique (89) destinée à l'injection d'un rayonnement d'une source de lumière externe (104).

17. Système de microscope (10) selon l'une quelconque des revendications 8 à 16, **caractérisé en ce que** le module générateur de faisceau comprend au moins des interfaces (86, 88, 90) destinées à l'injection de plusieurs faisceaux de référence (26) et/ou objets (28) dans plusieurs microscopes (98, 100, 102).

18. Système de microscope (10) selon l'une quelconque des revendications 8 à 17, **caractérisé en ce que** le module générateur de faisceau est conçu pour générer au moins deux faisceaux objets (28) et/ou deux faisceaux de référence (26) ayant des longueurs d'onde différentes.

19. Système de microscope (10) selon l'une quelconque des revendications 8 à 18, **caractérisé en ce qu'**il est prévu un module de commande qui est conçu pour régler l'intensité de faisceau et/ou la direction de polarisation du faisceau objet (28) et/ou du faisceau de référence (26) et/ou pour régler la phase entre le faisceau objet (28) et le faisceau de référence (26).

20. Système de microscope (10) selon l'une quelconque des revendications 8 à 19, **caractérisé en ce qu'**il est prévu un module de commande, dans lequel il est prévu des moyens de commande qui sont conçus pour le réglage automatique de la longueur de chemin optique entre l'objectif (16) et le support optique non linéaire (24) d'une manière qui correspond à la position focale du faisceau objet (28) et/ou la longueur focale de l'objectif.

21. Système de microscope (10) selon l'une quelconque des revendications 8 à 20, **caractérisé en ce qu'**il est prévu un module de commande, dans lequel il est prévu au moins une interface destinée à transmettre des données et des instructions de commande entre le module de commande et le module générateur de faisceau (12) et/ou le module de détection (14) et/ou un module de contrôle externe.

22. Système de microscope (10) selon l'une quelconque des revendications 8 à 21, **caractérisé par** un produit de programme informatique comportant des moyens à programmes destinés à commander un système de microscope (10) comportant les étapes suivantes :
rechercher des informations stockées dans une base de données et concernant le support optique non linéaire utilisé dans le module de détection (24),
établir l'intensité du faisceau de référence (26) et/ou du faisceau objet (26),
déterminer un rapport d'intensités optimal pour le couplage de faisceau du faisceau objet (26) et du faisceau de référence (28),
commander des éléments optiques électromécaniques (44, 46, 48 ; 50) pour régler l'intensité de faisceau du faisceau de référence (26) et/ou du faisceau objet (28) .

23. Système de microscope (10) selon la revendication 22, **caractérisé par** des moyens à programmes destinés à :
établir la longueur focale de l'objectif (16), commander des éléments optiques électromécaniques (44, 46, 48 ; 50) pour positionner le support optique non linéaire (24) dans la zone de focalisation du faisceau objet (28).
